# EUROPÄISCHE PATENTSCHRIFT

(11) **EP 3 201 663 B1**
(45) Veröffentlichungstag und Bekanntmachung des Hinweises auf die Patenterteilung: **06.01.2021**
(21) Anmeldenummer: 15812943.7
(22) Anmeldetag: 28.09.2015
(51) Int. Cl.: G02B 6/12

(54) **OPTOELEKTRONISCHES BAUELEMENT**
OPTOELECTRONIC COMPONENT
COMPOSANT OPTOÉLECTRONIQUE

(30) Priorität: 30.09.2014 DE 102014219792
(43) Veröffentlichungstag der Anmeldung: 09.08.2017
(73) Patentinhaber: Technische Universität Berlin, 10623 Berlin (DE)
(72) Erfinder: MEISTER, Stefan, 12587 Berlin (DE); RHEE, Hanjo, 10439 Berlin (DE); THEISS, Christoph, 14169 Berlin (DE); KUPIJAI, Sebastian, 12247 Berlin (DE)
(74) Vertreter: Fischer, Uwe
(86) Internationale Anmeldenummer: PCT/DE2015/200464
(87) Internationale Veröffentlichungsnummer: WO 2016/050243

(56) Entgegenhaltungen:
- US-A1- 2012 226 118
- US-A1- 2012 280 344
- US-A1- 2012 301 149
- US-A1- 2013 156 364
- US-A1- 2014 264 400
- FEDELI J M ET AL: "Electronic-photonic integration in the Helios project", 10TH INTERNATIONAL CONFERENCE ON GROUP IV PHOTONICS, IEEE, 28. August 2013 (2013-08-28), Seiten 146-147, XP032513505, ISSN: 1949-2081, DOI: 10.1109/GROUP4.2013.6644413 [gefunden am 2013-10-22]
- KNOLL D ET AL: "Monolithically integrated 25Gbit/sec receiver for 1.55[mu]m in photonic BiCMOS technology", OFC 2014, OSA, 9 March 2014 (2014-03-09), pages 1-3, XP032632948, DOI: 10.1109/OFC.2014.6886828 [retrieved on 2014-08-27]

## Beschreibung

Die Erfindung bezieht sich auf ein optoelektronisches Bauelement mit den Merkmalen gemäß dem Oberbegriff des Patentanspruchs 1.

Ein derartiges Bauelement ist in der Druckschrift "Electronic-Photonic Integration in the Helios Project" (J. M. Fedeli et al., 10th International Conference on Group IV Photonics, 28.08.2013, IEEE, ISSN 1949-2081) beschrieben.

Ein anderes Bauelement ist aus der US-Offenlegungsschrift US 2012/0301149 A1 bekannt.

Die Druckschrift "Monolithically integrated 25Gbit/sec receiver for 1.55µm in photonic BiCMOS technology" (Knoll et al., OFC 2014 OSA, 9. März 2014, Seiten 1-3, DOI: 10.1109 /OFC. 2014.6886828) beschreibt ein optoelektronisches Bauelement mit einem Chip, einem integrierten optischen Wellenleiter, auf der Substratoberseite des Substrats angeordneten Halbleiterschichten und auf der Substratoberseite des Substrats monolithisch integrierten elektrooptischen Komponenten.

Heutzutage erhältliche optische Sende-Empfangs-Geräte, in Fachkreisen "Transceiver" genannt, dienen als Sender und Empfänger zur Umwandlung von elektrischen Datensignalen in elektrische Signale und umgekehrt. Die Hauptschwierigkeit besteht darin, dass eine integrierte Baugruppe, in Fachkreisen "Package" genannt, für ein optisches Sende-Empfangs-Gerät einerseits die photonisch integrierten Schaltkreise, bestehend aus Wellenleitern, optisch aktiven und optisch passiven Komponenten, wie Modulatoren, Photodioden, Teilern und Lichtkopplern bereitstellen muss. Andererseits sind elektronische Bauteile wie Modulatortreiber, Transimpedanzverstärker (TIA), Begrenzungsverstärker, in Fachkreisen "Limiting Amplifier" genannt (LA), Takt- und Datenrückgewinnung, in Fachkreisen "Clock and Data Recovery" genannt (CDR) und Entzerrer, in Fachkreisen "Equalizer" genannt, erforderlich, für die bereits hochentwickelte Verbindungstechniken aus der Mikroelektronik existieren. Diese Vielzahl an unterschiedlichen Komponenten soll möglichst kompakt und energiesparend in einem gemeinsamen Formfaktor untergebracht werden, bei geringen elektrischen und optischen Verlusten und unter Verwendung kostengünstiger Aufbautechnik. Gleichzeitig muss eine effiziente Skalierbarkeit hin zu höheren Übertragungsraten und Stückzahlen Teil des Gesamtkonzepts sein.

Die einzelnen Chips des Sende-Empfangs-Geräts können bekanntermaßen per Drahtbonden, in Fachkreisen "Wire-Bonding" genannt, oder Einbau über Kopf ohne Bonddrähte, in Fachkreisen "Flip Chip" genannt, auf ein Verdrahtungssubstrat, in Fachkreisen "Interposer" genannt, das z.B. aus Silizium, Keramik oder einem Polymer besteht, oder direkt auf ein Substrat, das zumeist aus einer PCB-Platine besteht, aufgebracht und elektrisch kontaktiert werden. Dabei existieren Varianten, bei denen die Glasfasern durch eine Öffnung im Verdrahtungssubstrat oder Substrat zum optischen Chip geführt werden [1, 2] oder von oben in einen Bereich, der frei von elektrischen Kontaktflächen ist. Ebenfalls entwickelt werden Lösungen, bei denen optische Signale in ein Verdrahtungssubstrat [3], oder bei manchen Konzepten in ein Substrat [1], eingekoppelt, dort geführt und von dort wieder ausgekoppelt werden. Der erhebliche Nachteil dabei liegt in den langen Signalwegen mit entsprechenden Dämpfungsverlusten und Koppelverlusten an jedem Übergang. Alleine diese zusätzlichen Verluste können dazu führen, dass das Ende-zu-Ende Leistungsbudget für die gesamte Übertragungsstrecke keine Reserve mehr lässt für die Verluste, die in dem eigentlichen Übertragungsmedium, in der Regel einer optischen Faser, auftreten können.

In aktuellen kommerziellen optischen Sende-Empfangs-Geräten, die zumeist auf der Signalübertragung in multimodalen Fasern basieren, befinden sich diverse diskrete optische Komponenten zur Strahlumlenkung und -formung, wie Mikrolinsen, Mikroprismen, Strahlteiler und Umlenkspiegel. Diese Bauteile müssen maschinell auf einem Träger platziert und befestigt werden, was einer einfachen Skalierbarkeit im Weg steht.

Der Erfindung liegt ausgehend von dem beschriebenen Stand der Technik die Aufgabe zugrunde, ein optoelektronisches Bauelement anzugeben, das einen einfachen und kostengünstigen Gesamtaufbau aufweist.

Diese Aufgabe wird erfindungsgemäß durch ein optoelektronisches Bauelement mit den Merkmalen gemäß Patentanspruch 1 gelöst. Vorteilhafte Ausgestaltungen des erfindungsgemäßen optoelektronischen Bauelements sind in Unteransprüchen angegeben.

Erfindungsgemäß ist der Chip mit seiner Unterseite auf einer Leiterplatte aufgesetzt, die eine Verdrahtungsebene für die auf der Substratrückseite befindlichen elektrischen Leiterbahnanschlüsse bildet. Die Leiterplatte weist zumindest eine Verbindungsleitung auf, die den mit der elektrischen Komponente verbundenen Leiterbahnanschluss und den mit der elektrooptischen Komponente verbundenen Leiterbahnanschluss miteinander elektrisch verbindet.

Besonders vorteilhaft ist es also, wenn zumindest einer der optischen Anschlüsse, vorzugsweise alle optischen Anschlüsse, auf der Chipoberseite des Chips angeordnet sind und zumindest einer der elektrischen Anschlüsse, vorzugsweise alle elektrischen Anschlüsse, auf der Chipunterseite des Chips angeordnet sind.

Die monolithisch integrierte elektrooptische Komponente ist bevorzugt ein Photodetektor oder ein Modulator.

Vorzugsweise ist der integrierte Wellenleiter mit einer Umlenkeinrichtung ausgestattet oder steht mit einer solchen in Verbindung, die aus dem Wellenleiter auszukoppelnde optische Strahlung nahezu senkrecht in Richtung Chipoberseite umlenkt, oder Strahlung, die von der Chipoberseite nahezu senkrecht eintrifft, umlenkt und in den Wellenleiter einkoppelt.

Die Umlenkeinrichtung ist bevorzugt durch einen in dem Wellenleiter ausgebildeten Gitterkoppler gebildet.

Als Chip-Basismaterial wird vorzugsweise SOI(Silicon-On-Insulator)-Material eingesetzt. Demgemäß wird es als vorteilhaft angesehen, wenn sich auf dem Substrat eine Siliziumdioxidschicht und darüber eine Siliziumdeckschicht befindet und der optische Wellenleiter und die elektrooptische Komponente in der Siliziumdeckschicht integriert sind.

Die monolithisch integrierte elektrische Komponente ist bevorzugt ein Verstärker oder ein Treiber.

Bei einer besonders bevorzugten Ausgestaltung des optoelektronischen Bauelements ist vorgesehen, dass der mindestens eine integrierte Wellenleiter oder zumindest einer der integrierten Wellenleiter im Bereich eines seiner Wellenleiterenden mit einer Umlenkeinrichtung ausgestattet ist oder mit einer solchen in Verbindung steht, die von einer auf der Chipoberseite des Chips angeordneten Lichtquelle kommende und nahezu senkrecht zur Chipoberseite eintreffende optische Strahlung in den Wellenleiter einkoppelt, und im Bereich des anderen Wellenleiterendes mit einer Umlenkeinrichtung ausgestattet ist oder mit einer solchen in Verbindung steht, die aus dem Wellenleiter auszukoppelnde optische Strahlung nahezu senkrecht in Richtung Chipoberseite umlenkt, insbesondere in Richtung einer auf der Chipoberseite angeordneten Lichtleitfaser oder in Richtung eines auf der Chipoberseite angeordneten Lichtumlenkelements. Zumindest ein elektrischer Anschluss der Lichtquelle steht bevorzugt mittels einer Verbindungsleitung mit einem unter der Substratrückseite befindlichen Leiterbahnanschluss in Verbindung. Bei den im Bereich der Wellenleiterenden angeordneten Umlenkeinrichtungen handelt es sich vorzugsweise um Bragg-Gitter, die in dem Wellenleiter eingebracht sind.

Vorzugsweise ist zwischen den beiden Wellenleiterenden in dem Chip ein Modulator monolithisch integriert, der die Strahlung der Lichtquelle vor dem Einkoppeln in die Lichtleitfaser moduliert.

Auch ist es vorteilhaft, wenn der mindestens eine integrierte Wellenleiter oder zumindest einer der integrierten Wellenleiter im Bereich eines seiner Wellenleiterenden mit einer Umlenkeinrichtung ausgestattet ist oder mit einer solchen in Verbindung steht, die von einer auf der Chipoberseite angeordneten Lichtleitfaser kommende und nahezu senkrecht zur Chipoberseite eintreffende optische Strahlung in den Wellenleiter einkoppelt, und im Bereich des anderen Wellenleiterendes mit einem in dem Chip monolithisch integrierten Photodetektor in Verbindung steht. Bei der im Bereich des Wellenleiterendes angeordneten Umlenkeinrichtung handelt es sich vorzugsweise um ein Bragg-Gitter, das in dem Wellenleiter eingebracht ist.

Vorzugsweise ist in dem Chip außerdem ein Transimpedanzverstärker monolithisch integriert, der das elektrische Signal des Photodetektors verstärkt.

Auch kann vorgesehen sein, dass die elektrooptische Komponente und die elektrische Komponente mittels einer Leitung verbunden sind, die auf der Substratoberseite des Substrats angeordnet ist.

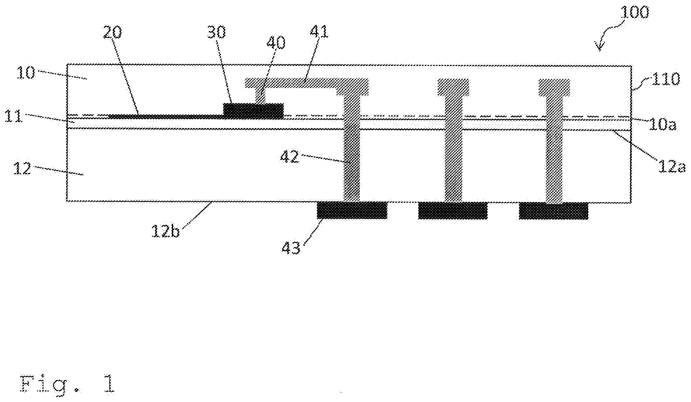

Die Erfindung wird nachfolgend anhand von Ausführungsbeispielen unter Bezugnahme auf die Figuren 1 bis 17 näher erläutert.
Die Figur 1 zeigt im Querschnitt ein nicht erfindungsgemäßes Beispiel für ein optoelektronisches Bauelement 100, das einen Chip 110, vorzugsweise in Form eines SOI-Chips, aufweist. Der Chip 110 umfasst ein Substrat 12 in Form eines Siliziumsubstrats, eine auf der Oberseite 12a des Substrats 12 befindliche vergrabene Siliziumdioxidschicht 11, eine auf der Siliziumdioxidschicht 11 befindliche Siliziumschicht 10a und ein auf der Siliziumschicht 10a befindliches Materialschichtpaket 10. Das Materialschichtpaket 10 bildet fachsprachlich den sogenannten "Backend of Line"-Bereich des Chips 110.
   In dem Chip 110 ist ein optischer Wellenleiter 20 integriert, bei dem es sich vorzugsweise um einen in der Siliziumschicht 10a ausgebildeten Rippenwellenleiter handelt. Außerdem ist in dem Chip 110, vorzugsweise in der Siliziumschicht 10a, eine elektrooptische Komponente 30 monolithisch integriert. Die elektrooptische Komponente 30 steht mittels einer Verbindungsleitung 41 mit einem unter der Substratrückseite 12b befindlichen Leiterbahnanschluss 43 in Verbindung. Die Verbindungsleitung 41 erstreckt sich durch ein Durchgangsloch 42 im Substrat 12 von der elektrooptischen Komponente 30 zu dem unter der Substratrückseite 12b befindlichen Leiterbahnanschluss 43.
   Die Verbindungsleitung 41 kann abschnittsweise auf der Chipoberseite des Chips 110 aufliegen oder - wie in der Figur 1 gezeigt - innerhalb des Materialschichtpakets 10 integriert sein. In beiden Falle erstreckt sich ein Abschnitt der Verbindungsleitung 41 vorzugsweise durch ein Loch 40 im Materialschichtpaket 10 bzw. im "Backend of Line"-Bereich des Chips 110 oder durch ein Loch 40 in einer oder mehreren Schichten dieses Materialschichtpakets 10 in Richtung der Chipoberseite des Chips 110.

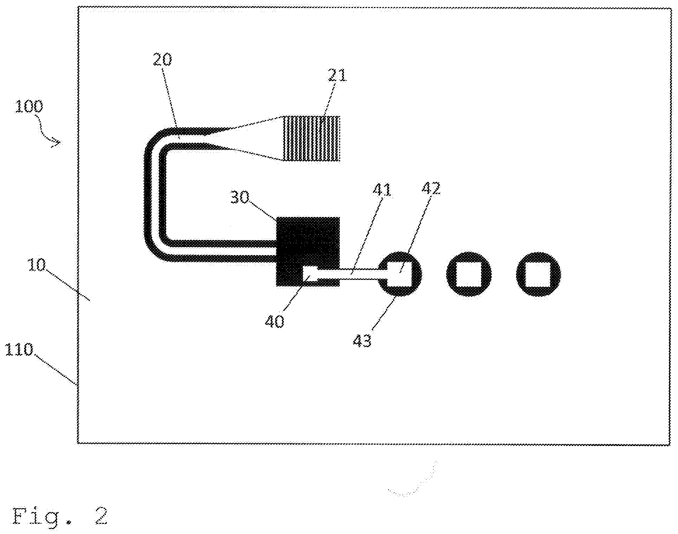

Die Figur 2 zeigt das optoelektronische Bauelement 100 gemäß Figur 1 in der Draufsicht.

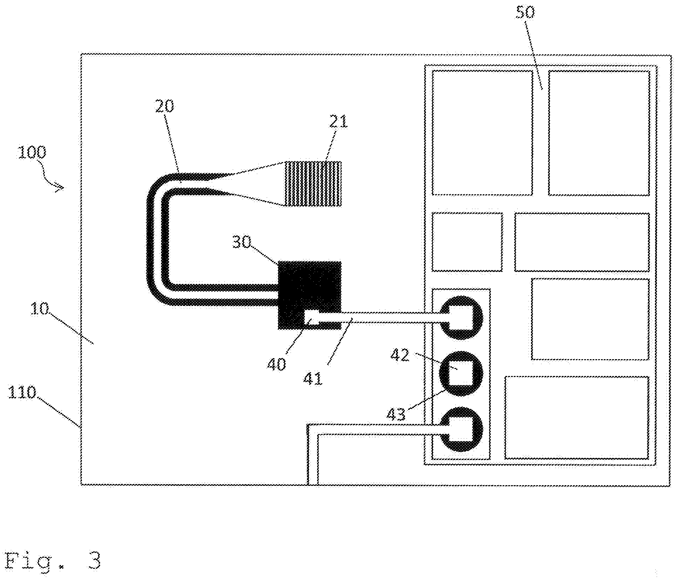

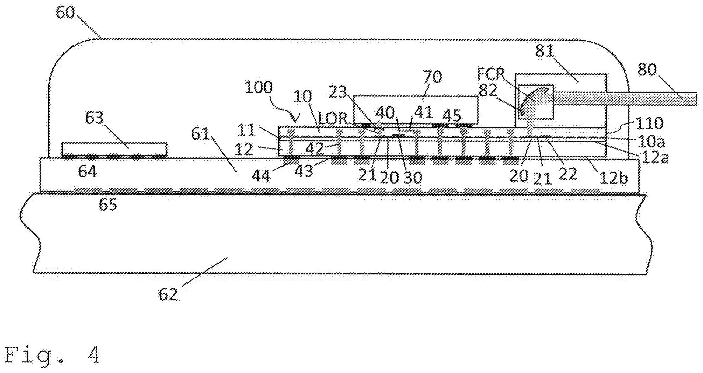

Die Figur 3 zeigt in der Draufsicht ein weiteres nicht erfindungsgemäßes Beispiel für ein optoelektronisches Bauelement 100, das einen Chip 110 in Form eines SOI-Chips aufweist. In die auf der vergrabenen Siliziumdioxidschicht 11 (siehe Figur 1) befindlichen Siliziumschicht 10a (siehe Figur 1) des Chips 110 sind ein optischer Wellenleiter 20, ein Gitterkoppler 21 sowie eine elektrische Komponente in Form einer Steuerelektronik 50 monolithisch integriert. Im Übrigen gelten die obigen Ausführungen im Zusammenhang mit den Figuren 1 bis 2 entsprechend. Weitere bevorzugte Ausführungsbeispiele für optoelektronische Bauelemente sind in den Figuren 4 bis 13 gezeigt.
Die Figur 4 zeigt im Querschnitt ein nicht erfindungsgemäßes Beispiel für ein optoelektronisches Bauelement 100, das mit weiteren Komponenten auf einem Verdrahtungssubstrat 61 platziert ist und mit Vergussmaterial 60 versiegelt ist. Über Anschlüsse zur elektrischen Kontaktierung 65 ist das Verdrahtungssubstrat 61 mit dem Trägersubstrat 62 verbunden. Auf dem Verdrahtungssubstrat 61 befinden sich neben dem optoelektronischen Bauelement 100 ein oder mehrere elektronische Chips 63, die mit dem Verdrahtungssubstrat 61 über elektrische Kontaktierungen 64 verbunden sind.
   Auf der Oberseite des Chips 110 im "Backend of Line"-Bereich 10 befinden sich eine oder mehrere monolithisch integrierte Linsen 23 zur optischen Kopplung der austretenden optischen Strahlung LOR eines oder mehrerer, auf dem optoelektronischen Bauelement 100 befindlicher Laser 70, die über elektrische Kontaktierungen 45 mit den Durchgangslöchern 42 im Chip 110 verbunden sind.
   Eine oder mehrere Lichtleitfasern 80 sind auf eine Weise mit auf dem optoelektronischen Bauelement 100 angebrachten Steckern 81, die Umlenkoptiken 82 enthalten, verbunden, dass die Lichtleitfaser oder -fasern 80 parallel zur Chipoberseite 110 verlaufen. Die durch die Umlenkoptiken 2 umgelenkte optische Strahlung FCR wird über Umlenkeinheiten wie z.B. Gitterkoppler 21 mit einem oder mehreren Wellenleitern 20 gekoppelt und z. B. in einer monolithisch integrierten elektrooptischen Komponente 30 verarbeitet.

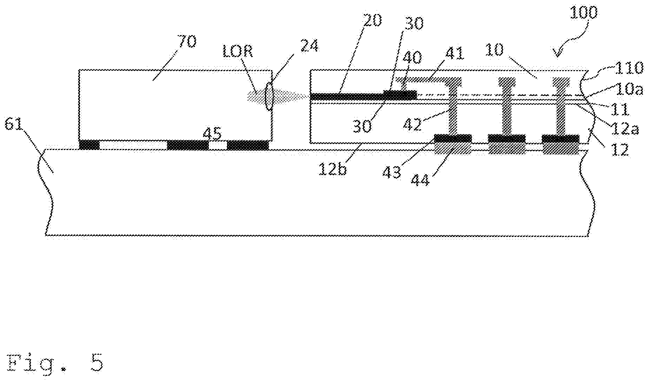

Die Figur 5 zeigt im Querschnitt ein nicht erfindungsgemäßes Beispiel für ein optoelektronisches Bauelement 100 bei dem sich ein oder mehrere Laser 70 neben dem optoelektronischen Bauelement 100 auf dem Verdrahtungssubstrat 61 befinden und die austretende optische Strahlung LOR durch eine Linse 24 in oder an einem oder mehreren Lasern 70 und durch die benachbarte Endfacette eines oder mehrerer Wellenleiter 20 in den Chip 110 gekoppelt und z. B. in einer monolithisch integrierten elektrooptischen Komponente 30 verarbeitet wird.

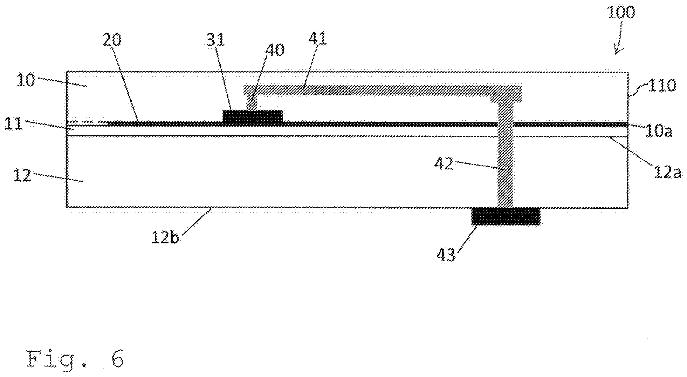

Die Figur 6 zeigt im Querschnitt ein nicht erfindungsgemäßes Beispiel für ein optoelektronisches Bauelement 100, bei dem die monolithisch integrierte elektrooptische Komponente ein Modulator 31 ist.

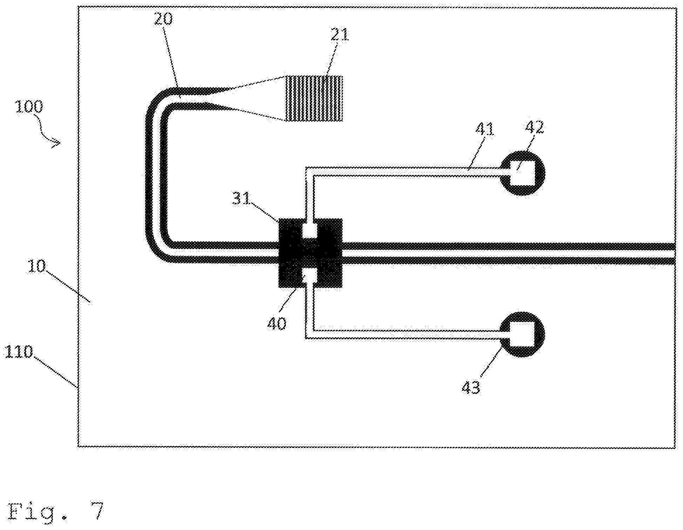

Die Figur 7 zeigt das optoelektronische Bauelement 100 gemäß Figur 6 in der Draufsicht.

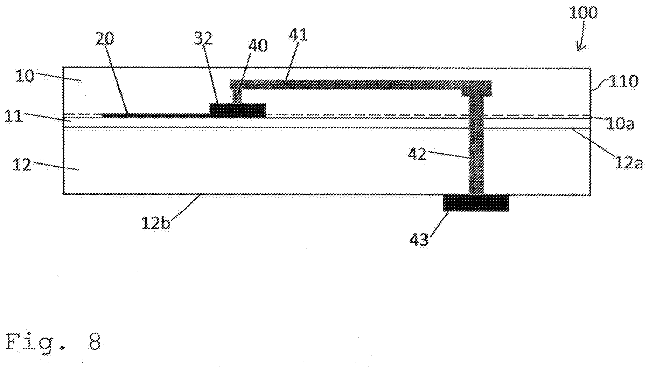

Die Figur 8 zeigt im Querschnitt ein nicht erfindungsgemäßes Beispiel für ein optoelektronisches Bauelement 100, bei dem die monolithisch integrierte elektrooptische Komponente ein Photodetektor 32 ist.

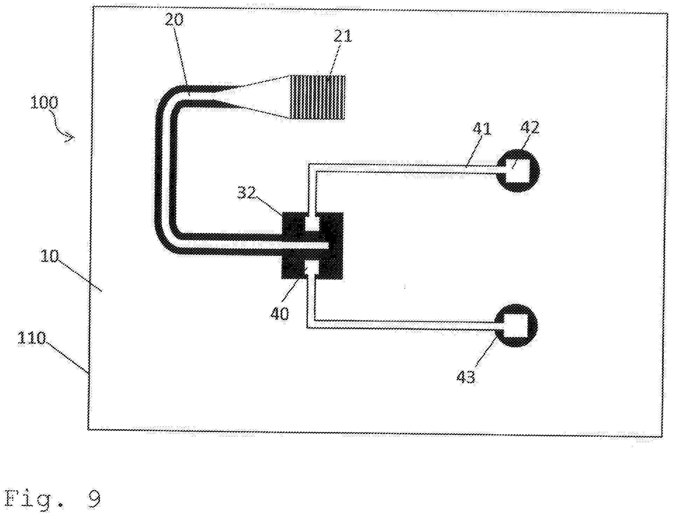

Die Figur 9 zeigt das optoelektronische Bauelement 100 gemäß Figur 8 in der Draufsicht.

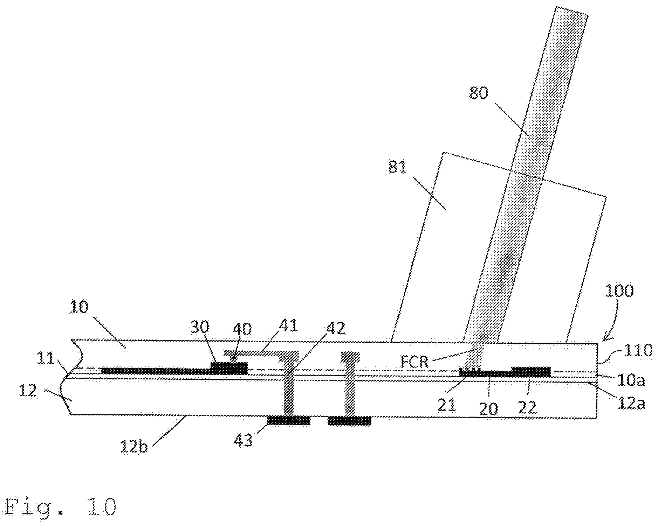

Die Figur 10 zeigt im Querschnitt ein nicht erfindungsgemäßes Beispiel für ein optoelektronisches Bauelement 100, bei dem eine oder mehrere Lichtleitfasern 80 auf eine Weise mit auf dem optoelektronischen Bauelement 100 angebrachten Steckern 81 verbunden sind, dass die Lichtleitfaser oder -fasern 80 nahezu senkrecht in Richtung Chipoberseite 110 zeigen. Die optische Strahlung FCR wird über Umlenkeinheiten wie z. B. Gitterkoppler 21 mit einem oder mehreren Wellenleitern 20 gekoppelt und z. B. in einem passiven photonischen Bauelement 22 verarbeitet.

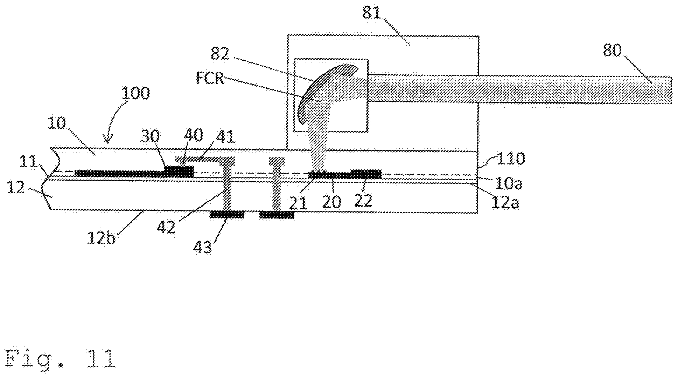

Die Figur 11 zeigt im Querschnitt ein nicht erfindungsgemäßes Beispiel für ein optoelektronisches Bauelement 100, bei dem eine oder mehrere Lichtleitfasern 80 auf eine Weise mit auf dem optoelektronischen Bauelement 100 angebrachten Steckern 81, die Umlenkoptiken 82 enthalten, verbunden sind, dass die Lichtleitfaser oder -fasern 80 parallel zur Chipoberseite 110 verlaufen. Die durch die Umlenkoptiken 2 umgelenkte optische Strahlung FCR wird über Umlenkeinheiten wie z. B. Gitterkoppler 21 mit einem oder mehreren Wellenleitern 20 gekoppelt und z. B. in einem passiven photonischen Bauelement 22 verarbeitet.

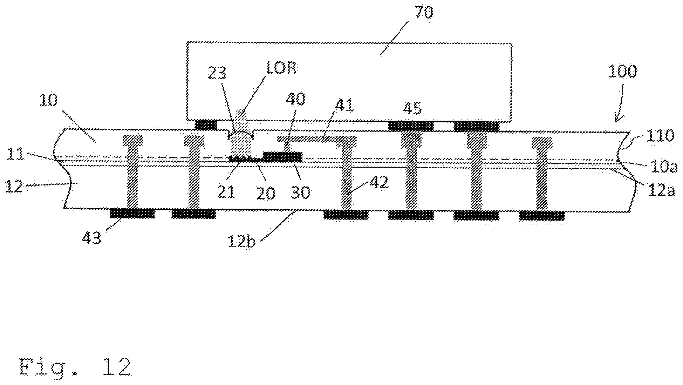

Die Figur 12 zeigt im Querschnitt ein nicht erfindungsgemäßes Beispiel für ein optoelektronisches Bauelement 100, bei dem sich auf der Oberseite des Chips 110 im "Backend of Line"-Bereich 10 eine oder mehrere monolithisch integrierte Linsen 23 befinden, die zur optischen Kopplung der austretenden optischen Strahlung LOR eines oder mehrerer, auf dem optoelektronischen Bauelement 100 befindlicher Laser 70 dienen, die über elektrische Kontaktierungen 45 mit den Durchgangslöchern 42 im Chip 110 verbunden sind. Die aus der Unterseite des oder der Laser 70 austretende optische Strahlung LOR wird über Umlenkeinheiten wie z.B. Gitterkoppler 21 mit einem oder mehreren Wellenleitern 20 gekoppelt und z.B. in einer monolithisch integrierten elektrooptischen Komponente 30 verarbeitet.

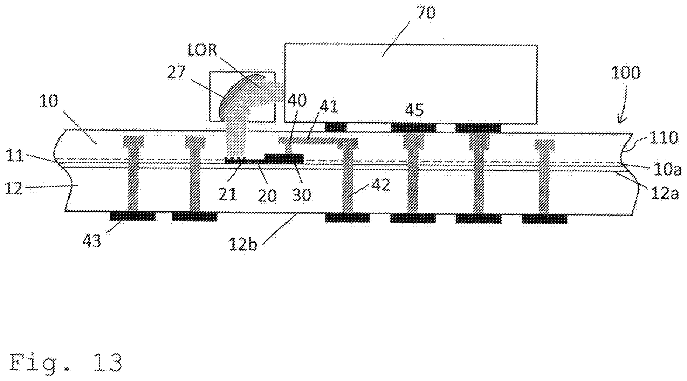

Die Figur 13 zeigt im Querschnitt ein nicht erfindungsgemäßes Beispiel für ein optoelektronisches Bauelement 100, bei dem sich auf dem optoelektronischen Bauelement 100 ein oder mehrere Laser 70 befinden, die über elektrische Kontaktierungen 45 mit den Durchgangslöchern 42 im Chip 110 verbunden sind. Die seitlich aus dem oder den Lasern 70 austretende optische Strahlung LOR wird durch eine Strahlumlenkung 27 in Umlenkeinheiten wie z. B. Gitterkoppler 21 geleitet und mit einem oder mehreren Wellenleitern 20 gekoppelt und z. B. in einer monolithisch integrierten elektrooptischen Komponente 30 verarbeitet.

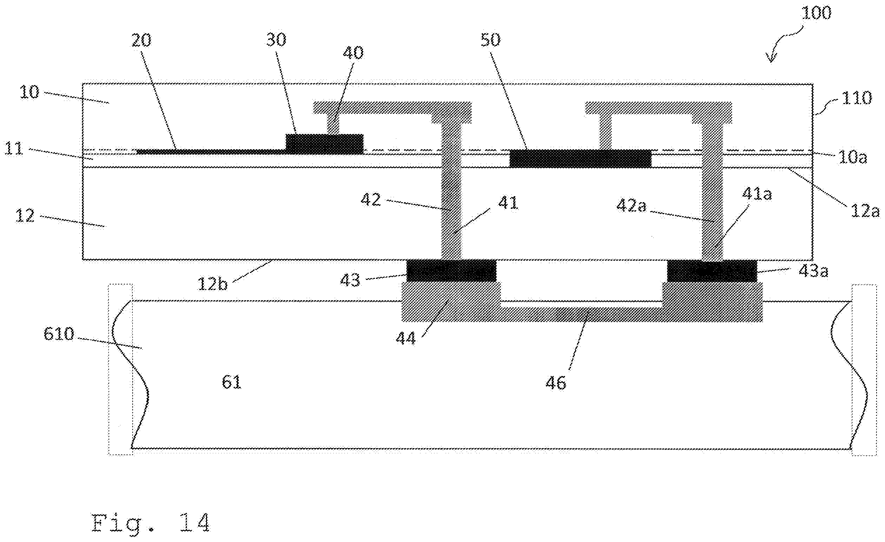

Die Figur 14 zeigt ein Ausführungsbeispiel für ein erfindungsgemäßes optoelektronisches Bauelement 100. Das Bauelement 100 umfasst einen Chip 110 mit einem Substrat 12 und mindestens einem in dem Chip 110 integrierten optischen Wellenleiter 20.

In einer oder mehreren auf der Substratoberseite 12a des Substrats 12 angeordneten Halbleiterschichten des Chips 110 oder auf der Substratoberseite 12a des Substrats 12 ist eine elektrooptische Komponente 30 monolithisch integriert.

Zumindest ein elektrischer Anschluss der monolithisch integrierten elektrooptischen Komponente 30 steht mittels einer Verbindungsleitung 41 mit einem unter der Substratrückseite 12b befindlichen Leiterbahnanschluss 43 in Verbindung.

Die Verbindungsleitung 41 erstreckt sich durch ein Durchgangsloch 42 im Substrat 12 von der elektrooptischen Komponente 30 zu dem unter der Substratrückseite 12b befindlichen Leiterbahnanschluss 43.

In einer oder mehreren auf der Substratoberseite 12a des Substrats 12 angeordneten Halbleiterschichten des Chips 110 oder auf der Substratoberseite 12a des Substrats 12 ist außerdem eine elektrische Komponente 50 monolithisch integriert.

Zumindest ein elektrischer Anschluss der monolithisch integrierten elektrischen Komponente 50 steht mittels einer Verbindungsleitung 41a mit einem unter der Substratrückseite 12b befindlichen Leiterbahnanschluss 43a in Verbindung.

Die Verbindungsleitung 41a erstreckt sich durch ein Durchgangsloch 42a im Substrat 12 von der elektrischen Komponente 50 zu dem unter der Substratrückseite 12b befindlichen Leiterbahnanschluss 43a.

Der Chip 110 ist mit seiner Unterseite auf einer Leiterplatte 610 aufgesetzt, die eine Verdrahtungsebene für die auf der Chiprückseite bzw. der Substratrückseite 12b befindlichen elektrischen Leiterbahnanschlüsse 43 und 43a bildet. Die Leiterplatte 610 weist zumindest eine Verbindungsleitung 46 auf, die den mit der elektrischen Komponente 50 verbundenen Leiterbahnanschluss 43a und den mit der elektrooptischen Komponente 30 verbundenen Leiterbahnanschluss 43 miteinander elektrisch verbindet.

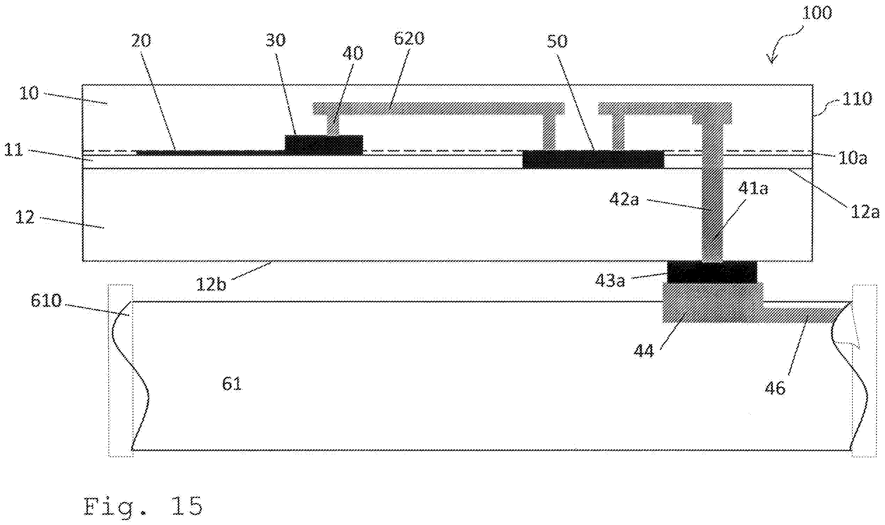

Die Figur 15 zeigt ein weiteres nicht erfindungsgemäßes Beispiel eines optoelektronischen Bauelements 100. Das Bauelement 100 umfasst einen Chip 110 mit einem Substrat 12 und mindestens einem in dem Chip 110 integrierten optischen Wellenleiter 20.

In einer oder mehreren auf der Substratoberseite 12a des Substrats 12 angeordneten Halbleiterschichten des Chips 110 oder auf der Substratoberseite 12a des Substrats 12 sind eine elektrooptische Komponente 30 und eine elektrische Komponente 50 monolithisch integriert.

Zumindest ein elektrischer Anschluss der monolithisch integrierten elektrischen Komponente 50 steht mittels einer Verbindungsleitung 41a mit einem unter der Substratrückseite 12b befindlichen Leiterbahnanschluss 43a in Verbindung.

Die Verbindungsleitung 41a erstreckt sich durch ein Durchgangsloch 42a im Substrat 12 von der elektrischen Komponente 50 zu dem unter der Substratrückseite 12b befindlichen Leiterbahnanschluss 43a.

Der Chip 110 ist mit seiner Unterseite auf einer Leiterplatte 610 aufgesetzt, die eine Verdrahtungsebene für den auf der Chiprückseite bzw. der Substratrückseite 12b befindlichen elektrischen Leiterbahnanschluss 43a bildet.

Die Leiterplatte 610 weist zumindest eine Verbindungsleitung 46 auf, die den mit der elektrischen Komponente 50 verbundenen Leiterbahnanschluss 43a mit einer anderen, aus Gründen der Übersicht in der Figur 15 nicht gezeigten, Komponente verbindet.

Die elektrooptische Komponente 30 und die elektrische Komponente 50 sind mittels mindestens einer Leitung 620 verbunden, die auf der Substratoberseite 12a des Substrats 12 angeordnet ist.

Bei den Bauelementen gemäß den Figuren 14 und 15 liegt die elektrische Komponente 50 jeweils unmittelbar auf dem Substrat 12 auf und schließt (nach oben) jeweils in der Höhe mit den Wellenleitern 20 in der Siliziumschicht 10a ab. Mit anderen Worten erstreckt sich die elektrische Komponente 50 jeweils von dem Substrat 12 bis in die auf der Siliziumdioxidschicht befindliche Siliziumschicht 10a hinein.

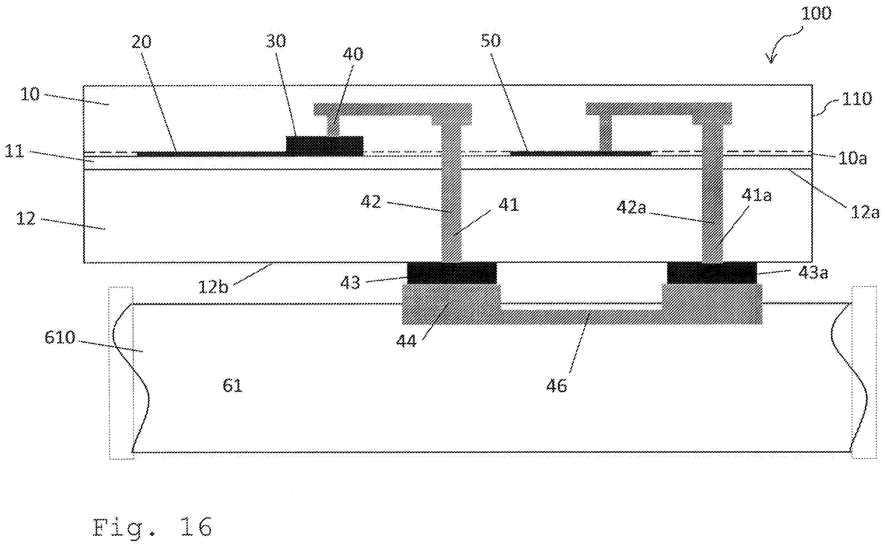

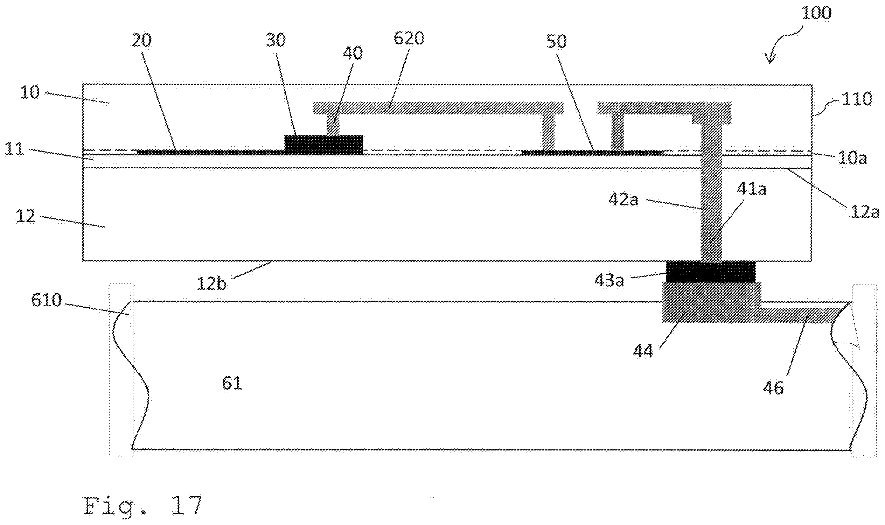

Die Bauelemente gemäß den Figuren 16 und 17 entsprechen bis auf die Ausgestaltung der elektrischen Komponente 50 jeweils den Bauelementen gemäß den Figuren 14 und 15. Bei den Bauelementen gemäß den Figuren 16 und 17 ist die elektrische Komponente 50 jeweils ausschließlich in der Siliziumschicht 10a angeordnet; im Übrigen gelten die Ausführungen im Zusammenhang mit den Bauelementen gemäß den Figuren 14 und 15 für die Bauelemente gemäß den Figuren 16 und 17 entsprechend.

Obwohl die Erfindung im Detail durch bevorzugte Ausführungsbeispiele näher illustriert und beschrieben wurde, so ist die Erfindung nicht durch die offenbarten Beispiele eingeschränkt, sondern allein durch den Umfang der Ansprüche.

### Literatur

[1] H. Schröder, T. Bierhoff, and D. Craiovan, "Anforderungen und Lösungen zur hochpräzisen optoelektronischen und mikrooptischen Montage auf Baugruppenträgern," Cooperative Computing & Communication Laboratory, C-Lab Report 9, 6, 2010.
[2] F. E. Doany, B. G. Lee, C. L. Schow, C. K. Tsang, C. Baks, Y. Kwark, R. John, J. U. Knickerbocker, and J. A. Kash, "Terabit/s-class 24-channel bidirectional optical transceiver module based on TSV Si carrier for boardlevel interconnects," in ECTC, Electronic Components and Technology Conference, Piscataway, NJ: IEEE, 2010, pp. 58-65.
[3] P. de Dobbelaere, G. Young, and M. Peterson, "Method And System For A Photonic Interposer", USA 13/422,776, July 12, 2012.

### Bezugszeichen:

- 10: Materialschichtpaket
- 10a: Siliziumschicht
- 11: Siliziumdioxidschicht
- 12: Substrat
- 12a: Oberseite des Substrats
- 12b: Substratrückseite
- 20: optischer Wellenleiter
- 21: Gitterkoppler
- 22: passives photonisches Bauelement
- 23: monolithisch integrierte Linse im "Backend of Line"-Bereich
- 24: Linse in oder an einem Laser
- 27: Strahlumlenkung
- 30: monolithisch integrierte elektrooptische Komponente
- 31: monolithisch integrierter elektrooptischer Modulator
- 32: monolithisch integrierte Photodiode / Photodetektor
- 40: Loch
- 41: Verbindungsleitung
- 41a: Verbindungsleitung
- 42: Durchgangsloch
- 42a: Durchgangsloch
- 43: Leiterbahnanschluss
- 43a: Leiterbahnanschluss
- 44: Anschluss zur elektrischen Kontaktierung auf einem Verdrahtungssubstrat
- 45: Anschluss zur elektrischen Kontaktierung eines Laserchips
- 46: Verbindungsleitung
- 50: monolithisch integrierte Steuerelektronik (Kointegration)
- 60: Vergussmaterial
- 61: Verdrahtungssubstrat
- 62: Trägersubstrat (z. B. PCB Platine)
- 63: elektronischer Chip
- 64: Anschluss zur elektrischen Kontaktierung eines elektronischen Chips mit dem Verdrahtungssubstrat
- 65: Anschluss zur elektrischen Kontaktierung des Verdrahtungssubstrats mit dem Trägersubstrat
- 70: Laser
- 80: Faser
- 81: Faserstecker
- 82: Umlenkoptik im Faserstecker
- 100: optoelektronisches Bauelement
- 110: Chip
- 610: Leiterplatte
- 620: Leitung

## Patentansprüche

1. Optoelektronisches Bauelement (100) mit einem Chip (110)
- mit einem Substrat (12) und
- mindestens einem in dem Chip (110) integrierten optischen Wellenleiter (20),
wobei
- in einer oder mehreren auf der Substratoberseite (12a) des Substrats (12) angeordneten Halbleiterschichten des Chips (110) oder auf der Substratoberseite (12a) des Substrats (12) eine elektrooptische Komponente (30) monolithisch integriert ist und
- zumindest ein elektrischer Anschluss der monolithisch integrierten elektrooptischen Komponente (30) mittels einer ersten Verbindungsleitung (41) mit einem ersten unter der Substratrückseite (12b) befindlichen Leiterbahnanschluss (43) in Verbindung steht,
- wobei sich die erste Verbindungsleitung (41) durch ein Durchgangsloch (42) im Substrat (12) von der elektrooptischen Komponente (30) zu dem ersten unter der Substratrückseite (12b) befindlichen Leiterbahnanschluss (43) erstreckt.
**dadurch gekennzeichnet, dass**
- in einer oder mehreren auf der Substratoberseite (12a) des Substrats (12) angeordneten Halbleiterschichten des Chips (110) oder auf der Substratoberseite (12a) des Substrats (12) eine elektrische Komponente (50) monolithisch integriert ist,
- zumindest ein elektrischer Anschluss der monolithisch integrierten elektrischen Komponente (50) mittels einer zweiten Verbindungsleitung (41a) mit einem zweiten unter der Substratrückseite (12b) befindlichen Leiterbahnanschluss (43a) in Verbindung steht,
- der Chip (110) mit seiner Unterseite auf einer Leiterplatte (610) aufgesetzt ist, die eine Verdrahtungsebene für die auf der Substratrückseite (12b) befindlichen elektrischen Leiterbahnanschlüsse (43, 43a) bildet, und
- die Leiterplatte (610) zumindest eine dritte Verbindungsleitung (46) aufweist, die den zweiten Leiterbahnanschluss (43a) und den ersten Leiterbahnanschluss (43) miteinander elektrisch verbindet.

2. Optoelektronisches Bauelement (100) nach Anspruch 1, **dadurch gekennzeichnet, dass**
- zumindest ein optischer Anschluss, vorzugsweise alle optischen Anschlüsse, auf der Chipoberseite des Chips (110) angeordnet sind und
- zumindest einer der elektrischen Anschlüsse, vorzugsweise alle elektrischen Anschlüsse, auf der Chipunterseite des Chips (110) angeordnet sind.

3. Optoelektronisches Bauelement (100) nach einem der voranstehenden Ansprüche,
**dadurch gekennzeichnet, dass**
die monolithisch integrierte elektrooptische Komponente (30) ein Photodetektor (32) oder ein Modulator (31) ist.

4. Optoelektronisches Bauelement (100) nach einem der voranstehenden Ansprüche,
**dadurch gekennzeichnet, dass**
der integrierte Wellenleiter (20) mit einer Umlenkeinrichtung ausgestattet ist oder mit einer solchen in Verbindung steht, die aus dem Wellenleiter (20) auszukoppelnde optische Strahlung nahezu senkrecht in Richtung Chipoberseite umlenkt, oder Strahlung, die von der Chipoberseite nahezu senkrecht eintrifft, umlenkt und in den Wellenleiter (20) einkoppelt.

5. Optoelektronisches Bauelement (100) nach Anspruch 4,
**dadurch gekennzeichnet, dass**
die Umlenkeinrichtung durch einen in dem Wellenleiter (20) ausgebildeten Gitterkoppler (21) gebildet ist.

6. Optoelektronisches Bauelement (100) nach einem der voranstehenden Ansprüche,
**dadurch gekennzeichnet, dass**
- sich auf dem Substrat (12) eine Siliziumdioxidschicht und darüber eine Siliziumschicht (10a) befindet und
- der optische Wellenleiter (20) und die elektrooptische Komponente (30) in der Siliziumschicht (10a) monolithisch integriert sind.

7. Optoelektronisches Bauelement (100) nach einem der voranstehenden Ansprüche,
**dadurch gekennzeichnet, dass**
die monolithisch integrierte elektrische Komponente (50) ein Verstärker oder ein Treiber ist.

8. Optoelektronisches Bauelement (100) nach einem der voranstehenden Ansprüche,
**dadurch gekennzeichnet, dass**
der mindestens eine integrierte Wellenleiter (20) oder zumindest einer der integrierten Wellenleiter (20)
- im Bereich eines seiner Wellenleiterenden mit einer Umlenkeinrichtung ausgestattet ist oder mit einer solchen in Verbindung steht, die von einer auf der Chipoberseite des Chips (110) angeordneten Lichtquelle kommende und nahezu senkrecht zur Chipoberseite eintreffende optische Strahlung in den Wellenleiter (20) einkoppelt, und
- im Bereich des anderen Wellenleiterendes mit einer Umlenkeinrichtung ausgestattet ist oder mit einer solchen in Verbindung steht, die aus dem Wellenleiter (20) auszukoppelnde optische Strahlung nahezu senkrecht in Richtung Chipoberseite umlenkt, insbesondere in Richtung einer auf der Chipoberseite angeordneten Lichtleitfaser oder in Richtung eines auf der Chipoberseite angeordneten Lichtumlenkelements,
- wobei zumindest ein elektrischer Anschluss der Lichtquelle mittels einer Verbindungsleitung mit einem unter der Substratrückseite (12b) befindlichen Leiterbahnanschluss in Verbindung steht.

9. Optoelektronisches Bauelement (100) nach Anspruch 8,
**dadurch gekennzeichnet, dass**
zwischen den beiden Wellenleiterenden in dem Chip (110) ein Modulator monolithisch integriert ist, der die Strahlung der Lichtquelle vor dem Einkoppeln in die Lichtleitfaser moduliert.

10. Optoelektronisches Bauelement (100) nach einem der voranstehenden Ansprüche,
**dadurch gekennzeichnet, dass**
der mindestens eine integrierte Wellenleiter (20) oder zumindest einer der integrierten Wellenleiter (20)
- im Bereich eines seiner Wellenleiterenden mit einer Umlenkeinrichtung ausgestattet ist oder mit einer solchen in Verbindung steht, die von einer auf der Chipoberseite angeordneten Lichtleitfaser kommende und nahezu senkrecht zur Chipoberseite eintreffende optische Strahlung in den Wellenleiter (20) einkoppelt, und
- im Bereich des anderen Wellenleiterendes mit einem in dem Chip (110) integrierten Photodetektor (32) in Verbindung steht.

11. Optoelektronisches Bauelement (100) nach Anspruch 10,
**dadurch gekennzeichnet, dass**
in dem Chip (110) ein Transimpedanzverstärker monolithisch integriert ist, der das elektrische Signal des Photodetektors (32) verstärkt.

12. Optoelektronisches Bauelement (100) nach einem der voranstehenden Ansprüche,
**dadurch gekennzeichnet, dass**
- die elektrooptische Komponente (30) und die elektrische Komponente (50) mittels einer Leitung (620) verbunden sind, die auf der Substratoberseite (12a) des Substrats (12) angeordnet ist.

## Claims

1. Optoelectronic component (100) comprising a chip (110)
- comprising a substrate (12) and
- at least one optical waveguide (20) integrated in the chip (110),
wherein
- an electro-optical component (30) is monolithically integrated in one or a plurality of semiconductor layers of the chip (110) arranged on the substrate top side (12a) of the substrate (12), or on the substrate top side (12a) of the substrate (12) and
- at least one electrical connection of the monolithically integrated electro-optical component (30) is connected by means of a first connection line (41) to a first conductor track connection (43) situated below the substrate rear side (12b),
- wherein the first connection line (41) extends through a through hole (42) in the substrate (12) from the electro-optical component (30) to the first conductor track connection (43) situated below the substrate rear side (12b),
**characterized in that**
- an electrical component (50) is monolithically integrated in one or a plurality of semiconductor layers of the chip (110) arranged on the substrate top side (12a) of the substrate (12) or on the substrate top side (12a) of the substrate (12),
- at least one electrical connection of the monolithically integrated electrical component (50) is connected by means of a second connection line (41a) to a second conductor track connection (43a) situated below the substrate rear side (12b),
- the chip (110) is placed by its underside on a printed circuit board (610) that forms a wiring plane for the electrical conductor track connections (43, 43a) situated on the substrate rear side (12b), and
- the printed circuit board (610) has at least one third connection line (46) which electrically interconnects the second conductor track connection (43a) and the first conductor track connection (43).

2. Optoelectronic component (100) according to Claim 1,
**characterized in that**
- at least one optical connection, preferably all of the optical connections, are arranged on the chip top side of the chip (110) and
- at least one of the electrical connections, preferably all of the electrical connections, are arranged on the chip underside of the chip (110).

3. Optoelectronic component (100) according to either of the preceding claims,
**characterized in that**
the monolithically integrated electro-optical component (30) is a photodetector (32) or a modulator (31) .

4. Optoelectronic component (100) according to any of the preceding claims,
**characterized in that**
the integrated waveguide (20) is equipped with or connected to a deflection device which deflects optical radiation to be coupled out from the waveguide (20) virtually perpendicularly in the direction of the chip top side, or deflects radiation incident virtually perpendicularly from the chip top side and couples it into the waveguide (20) .

5. Optoelectronic component (100) according to Claim 4,
**characterized in that**
the deflection device is formed by a grating coupler (21) embodied in the waveguide (20).

6. Optoelectronic component (100) according to any of the preceding claims,
**characterized in that**
- a silicon dioxide layer is situated on the substrate (12) and a silicon layer (10a) is situated above said silicon dioxide layer, and
- the optical waveguide (20) and the electro-optical component (30) are monolithically integrated in the silicon layer (10a).

7. Optoelectronic component (100) according to any of the preceding claims,
**characterized in that**
the monolithically integrated electrical component (50) is an amplifier or a driver.

8. Optoelectronic component (100) according to any of the preceding claims,
**characterized in that**
the at least one integrated waveguide (20) or at least one of the integrated waveguides (20)
- in the region of one of its waveguide ends is equipped with or connected to a deflection device by which optical radiation that comes from a light source arranged on the chip top side of the chip (110) and is incident virtually perpendicularly to the chip top side is coupled into the waveguide (20), and
- in the region of the other waveguide end is equipped with or connected to a deflection device which deflects optical radiation to be coupled out from the waveguide (20) virtually perpendicularly in the direction of the chip top side, in particular in the direction of an optical fibre arranged on the chip top side or in the direction of a light deflection element arranged on the chip top side,
- wherein at least one electrical connection of the light source is connected by means of a connection line to a conductor track connection situated below the substrate rear side (12b).

9. Optoelectronic component (100) according to Claim 8,
**characterized in that**
a modulator is monolithically integrated between the two waveguide ends in the chip (110), said modulator modulating the radiation of the light source before coupling into the optical fibre.

10. Optoelectronic component (100) according to any of the preceding claims,
**characterized in that**
the at least one integrated waveguide (20) or at least one of the integrated waveguides (20)
- in the region of one of its waveguide ends is equipped with or connected to a deflection device by which optical radiation that comes from an optical fibre arranged on the chip top side and is incident virtually perpendicularly to the chip top side is coupled into the waveguide (20), and
- in the region of the other waveguide end is connected to a photodetector (32) integrated in the chip (110).

11. Optoelectronic component (100) according to Claim 10,
**characterized in that**
a transimpedance amplifier is monolithically integrated in the chip (110), said transimpedance amplifier amplifying the electrical signal of the photodetector (32).

12. Optoelectronic component (100) according to any of the preceding claims,
**characterized in that**
- the electro-optical component (30) and the electrical component (50) are connected by means of a line (620) that is arranged on the substrate top side (12a) of the substrate (12).

## Revendications

1. Composant optoélectronique (100) comprenant une puce (110) comprenant
- un substrat (12) et
- au moins un guide d'ondes optique (20) intégré dans la puce (110),
- un composant électro-optique (30) étant intégré de manière monolithique dans une ou plusieurs couches semi-conductrices de la puce (110), disposées sur la face supérieure (12a) du substrat (12), ou sur la face supérieure (12a) du substrat (12) et
- au moins une borne électrique du composant électro-optique (30), intégré de manière monolithique, étant reliée à une première borne de piste conductrice (43), située sous la face arrière (12b) du substrat, au moyen d'une première ligne de liaison (41),
- la première ligne de liaison (41) s'étendant à travers un trou traversant (42) ménagé dans le substrat (12) depuis le composant électro-optique (30) à la première borne de piste conductrice (43) située sous la face arrière (12b) du substrat,
**caractérisé en ce que**
- un composant électrique (50) est intégré de manière monolithique dans une ou plusieurs couches semi-conductrices de la puce (110), disposées sur la face supérieure (12a) du substrat (12), ou sur la face supérieure (12a) du substrat (12),
- au moins une borne électrique du composant électrique (50), intégré de manière monolithique, est reliée à une deuxième borne de piste conductrice (43a), située sous la face arrière (12b) du substrat, au moyen d'une deuxième ligne de liaison (41a),
- la puce (110) est placée avec sa face inférieure sur une carte de circuit imprimé (610) qui forme un plan de câblage des bornes de pistes conductrices électriques (43, 43a) situées sur la face arrière (12b) du substrat, et
- la carte de circuit imprimé (610) comporte au moins une troisième ligne de liaison (46) qui relie électriquement la deuxième borne de piste conductrice (43a) et la première borne de piste conductrice (43) l'une à l'autre.

2. Composant optoélectronique (100) selon la revendication 1,
**caractérisé en ce que**
- au moins une borne optique, de préférence toutes les bornes optiques, sont disposées sur la face supérieure de la puce (110) et
- au moins une des bornes électriques, de préférence toutes les bornes électriques, sont disposées sur la face inférieure de la puce (110).

3. Composant optoélectronique (100) selon l'une des revendications précédentes,
**caractérisé en ce que**
le composant électro-optique (30), intégré de manière monolithique, est un photodétecteur (32) ou un modulateur (31).

4. Composant optoélectronique (100) selon l'une des revendications précédentes,
**caractérisé en ce que**
le guide d'ondes intégré (20) est équipé d'un dispositif de déviation, ou est relié à un tel dispositif qui dévie le rayonnement optique, qui doit être délivré par couplage en sortie du guide d'ondes (20), presque perpendiculairement en direction de la face supérieure de la puce, ou qui dévie le rayonnement, qui est incident à peu près perpendiculairement à la face supérieure de la puce, et l'injecte par couplage dans le guide d'ondes (20).

5. Composant optoélectronique (100) selon la revendication 4,
**caractérisé en ce que**
le dispositif de déviation est formé par un coupleur de réseau (21) formé dans le guide d'ondes (20).

6. Composant optoélectronique (100) selon l'une des revendications précédentes,
**caractérisé en ce que**
- une couche de dioxyde de silicium est placée sur le substrat (12) et une couche de silicium (10a) est placée par-dessus, et
- le guide d'ondes optique (20) et le composant électro-optique (30) sont intégrés de manière monolithique dans la couche de silicium (10a).

7. Composant optoélectronique (100) selon l'une des revendications précédentes,
**caractérisé en ce que**
le composant électrique (50) intégré de manière monolithique est un amplificateur ou un pilote.

8. Composant optoélectronique (100) selon l'une des revendications précédentes,
**caractérisé en ce que**
l'au moins un guide d'ondes intégré (20) ou au moins un des guides d'ondes intégrés (20)
- est équipé d'un dispositif de déviation dans la région de l'une de ses extrémités de guide d'ondes, ou est relié à un tel dispositif de déviation, qui injecte par couplage dans le guide d'ondes (20) un rayonnement optique qui provient d'une source de lumière disposée sur la face supérieure de la puce (110) et qui est incident à peu près perpendiculairement à la face supérieure de la puce, et
- est équipé d'un dispositif de déviation dans la région de l'autre extrémité du guide d'ondes, ou est relié à un tel dispositif de déviation, qui dévie le rayonnement optique qui doit être délivré par couplage en sortie du guide d'ondes (20) à peu près perpendiculairement en direction de la face supérieure de la puce, notamment en direction d'une fibre optique disposée sur la face supérieure de la puce ou en direction d'un élément de déviation de lumière disposé sur la face supérieure de la puce,
- au moins une borne électrique de la source de lumière étant reliée au moyen d'une ligne de liaison à une borne de piste conductrice située sous la face arrière (12b) du substrat.

9. Composant optoélectronique (100) selon la revendication 8,
**caractérisé en ce que**
un modulateur est intégré de manière monolithique dans la puce (110) entre les deux extrémités de guide d'ondes et module le rayonnement de la source de lumière avant de l'injecter par couplage dans la fibre optique.

10. Composant optoélectronique (100) selon l'une des revendications précédentes,
**caractérisé en ce que**
l'au moins un guide d'ondes intégré (20) ou au moins un des guides d'ondes intégrés (20)
- est équipé d'un dispositif de déviation dans la région de l'une de ses extrémités de guide d'ondes, ou est relié à un tel dispositif de déviation, qui injecte par couplage dans le guide d'ondes (20) un rayonnement optique qui provient d'une fibre optique disposée sur la face supérieure de la puce et qui est incident à peu près perpendiculairement à la face supérieure de la puce, et
- est relié à un photodétecteur (32), intégré dans la puce (110), dans la région de l'autre extrémité du guide d'ondes.

11. Composant optoélectronique (100) selon la revendication 10,
**caractérisé en ce que**
un amplificateur à transimpédance est intégré de manière monolithique dans la puce (110) et amplifie le signal électrique du photodétecteur (32).

12. Composant optoélectronique (100) selon l'une des revendications précédentes,
**caractérisé en ce que**
- le composant électro-optique (30) et le composant électrique (50) sont reliés au moyen d'une ligne (620) qui est disposée sur la face supérieure (12a) du substrat (12).
